# EUROPÄISCHE PATENTSCHRIFT

(11) **EP 1 340 419 B1**
(45) Veröffentlichungstag und Bekanntmachung des Hinweises auf die Patenterteilung: **01.08.2007**
(21) Anmeldenummer: 03100408.8
(22) Anmeldetag: 20.02.2003
(51) Int. Cl.: A01D 69/00, A01D 41/14

(54) **Mechanismus zum wahlweisen Verbringen eines ersten Getriebeelements in Eingriff mit einem zweiten Getriebeelement**
Mechanism for alternatively meshing a first gear train element with a second gear train element
Mécanisme pour amener alternativement un premier élément d'engrenage en prise avec un deuxième élément d'engrenage

(30) Priorität: 28.02.2002 US 86055
(43) Veröffentlichungstag der Anmeldung: 03.09.2003
(73) Patentinhaber: DEERE & COMPANY, Moline, Illinois 61265-8098 (US)
(72) Erfinder: Teijido, Joseph Albert, IL 61244,East Moline (US); Pierce, Joseph Albert, IA 52742, Dewitt (US); Roe, Dennis Merle, IL 61204, Coal Valley (US)
(74) Vertreter: Holst, Sönke

(56) Entgegenhaltungen:
- US-A- 4 138 837
- US-A- 4 879 868

## Beschreibung

Die Erfindung betrifft einen Mechanismus zum wahlweisen Verbringen eines ersten Getriebeelements in Eingriff mit einem zweiten Getriebeelement.

Landwirtschaftliche Mähdrescher sind typischerweise mit einem sich nach vorn erstreckenden Schrägförderer ausgestattet, um geerntetes Gut von einem Schneidwerk in den Mähdrescher zu fördern. Bei schwierigen Erntegutbedingungen ist es möglich, dass sich der Schrägförderer durch das geerntete Gut verstopft. Daher ist eine Möglichkeit erforderlich, die Verstopfung zu lösen.

Die US 4 879 868 offenbart einen Reversiererzusammenbau, der verwendet werden kann, um den zum Einführen von Getreide in den Mähdrescher dienenden Schrägförderer zu reversieren. Die angetriebene Hauptriemenscheibe ist mit einem außen verzahnten, zusammenwirkenden Zusammenbau ausgestattet, in den selektiv ein innen vernutetes Antriebselement eingreift, das entlang der Antriebswelle beweglich ist. Die Antriebswelle ist mit äußeren Nuten versehen, die mit den inneren Nuten des Antriebselements zusammenwirken, so dass die angetriebene Hauptriemenscheibe die Antriebswelle antreibt, wenn das Antriebselement mit dem zusammenwirkenden verzahnten Zusammenbau der angetriebenen Hauptriemenscheibe betriebsmäßig gekoppelt ist. Das Antriebselement ist außerdem mit einem Getriebezusammenbau ausgestattet, der mit einem zusammenwirkenden verzahnten Zusammenbau in Betriebsverbindung bringbar ist, der auf der zweiten angetriebenen Riemenscheibe angeordnet ist. Indem das angetriebene Element von der angetriebenen Hauptriemenscheibe fortgeschoben wird, bringt das Antriebselement den verzahnten, zusammenwirkenden Zusammenbau der angetriebenen Hauptantriebsscheibe außer Eingriff und das zweite verzahnte Element greift in den verzahnten zusammenwirkenden Zusammenbau der zweiten angetriebenen Riemenscheibe ein. Dadurch wird die angetriebene Hauptriemenscheibe betriebsmäßig von der Antriebswelle abgekoppelt und die zweite angetriebene Riemenscheibe treibt nun die Antriebswelle an. Indem der zweite verzahnte Zusammenbau mit dem gezahnten zusammenwirkenden Zusammenbau auf der zweiten angetriebenen Riemenscheibe gekoppelt wird, wird die Ausgabe im Ergebnis reversiert, wodurch sich die Drehung der Schrägfördererantriebswelle umkehrt.

Die Positionierung des Antriebselements wird durch ein Zug und Druck übertragendes Kabel gesteuert, das einen in der Bedienerkabine des Mähdreschers angeordneten Handgriff aufweist. Das Zug und Druck übertragende Kabel ist betriebsmäßig mit einer Kurbel gekoppelt, die über eine Verbindung mit dem Antriebselement gekoppelt ist.

Ein anderer Antriebs- und Reversierzusammenbau für einen Schrägförderer ist in der US 4 138 837 A beschrieben. In dieser Patentschrift wird eine Planetengetriebesatzanordnung beschrieben, die die Bereitstellung eines reversierten Antriebs erleichtert, einschließlich eines einzelnen Ringradzusammenbaus und einer Kontrollverbindung. Das Ringrad wird durch seinen Eingriff mit den Planetenstiften des Zahnradsatzes in seiner radialen Position gehalten. Eine Schalthülse, die mit einer Ausgangswelle durch eine Nut/Feder-Verbindung verbunden ist, überträgt die Ausgangsleistung vom Planetengetriebe auf diese Welle, wobei sie wahlweise entweder in ein Sonnengetriebe eingreift zwecks des Vorwärtstriebs mit verlangsamter Geschwindigkeit, oder in eine Nabenplatte, die an dem Ringrad angebracht ist, zwecks eines reversierten Antriebs. Die Steuerverbindung umfasst ein Zug und Druck übertragendes Kontrollkabel, das mit einem manuellen Kontrollhandgriff verbunden ist, der in der Bedienerstation angeordnet ist.

Bei dem Mähdrescher der Serie 10 der Marke John Deere wird der Reversierer durch Niederdrücken eines Pedals in der Kabine aktiviert, das mit einem Zug und Druck übertragenden Kabel verbunden ist, welches zu der Schalthülse oder dem Antriebselement im Getriebe führt. Wenn jedoch das ausgewählte Zahnrad und die Schalthülse nicht richtig ausgerichtet sind, ist es erforderlich, den Druck auf dem Pedal aufrechtzuerhalten und das Endgetriebe in die An- und Ausposition zu rütteln, bis das Zahnrad und die Schalthülse ausgerichtet sind. Sobald die Komponenten in Ausrichtung kommen, wird die Schalthülse herübergleiten und es dem Getriebe ermöglichen, in den reversierten Antrieb umgeschaltet zu werden.

Bei den zuvor beschriebenen Zusammenbauten hängt ein erfolgreiches Eingreifen des Reversierers von einer genauen Ausrichtung zwischen dem Antriebselement oder der Schalthülse und dem Zahnrad ab. Oft muss der Bediener mehrere Male versuchen, unter Verwendung entweder des Handgriffs oder des Pedals den Reversierer in Eingriff zu bringen, was die Effizienz des Bedieners vermindert.

Die der Erfindung zu Grunde liegende Aufgabe wird darin gesehen, einen verbesserten Mechanismus zum Bewegen von Getriebeelementen bereitzustellen, bei dem die erwähnten Probleme nicht auftreten.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung schlägt einen Mechanismus zum Ein- und Ausschalten des Reversierbetriebs eines Einzugskanals, insbesondere eines Schrägförderers einer Erntemaschine vor. Dieser Mechanismus löste das Problem eines genauen Eingriffs zwischen der Schalthülse oder einem beliebigen anderen Antriebselement und dem Zahnrad, Zahn oder Nuten zum Reversieren und dem Zahnrad, Zahn oder Nuten für den Vorwärtsantrieb des Schrägförderergetriebes. Der Mechanismus umfasst einen elektrisch gesteuerten Aktor, der eine Feder beaufschlagt oder zusammendrückt, welche eine Schaltkraft auf eine Schaltwelle oder Schaltgabel des Getriebes ausübt und letztere entweder in einen Eingriff zum Reversieren oder zum Vorwärtstreiben bringt.

Auf diese Weise erreicht man, dass die Feder das bewegliche Getriebeelement selbsttätig in die gewünschte Stellung bewegt, sobald die in Eingriff zu bringenden Getriebeelemente miteinander ausgerichtet sind.

In einer bevorzugten Ausführungsform umfasst der Mechanismus einen Kolben. Der Aktor und der Kolben sind mit der Schaltwelle, -hülse oder Schaltgabel des Getriebes in Serie geschaltet, in der Regel am Boden des Schrägförderers. Der Aktor treibt den Kolben und der Kolben drückt die Feder zusammen. Die Feder speichert die vom Aktor bereitgestellte Energie und ermöglicht es dem Schaltvorgang im Innern des Getriebes aufzutreten, wenn die Zahnräder, Zähne oder Nuten richtig ausgerichtet sind. Wenn die Zahnräder richtig ausgerichtet sind, tritt der Schaltvorgang sofort auf. Wenn jedoch eine Fehlausrichtung vorliegt, hält die Feder die Kraft auf die Schaltwelle oder Schaltgabel in Richtung der gewünschten Verschiebung aufrecht. Wenn der Bediener einen Schaltvorgang von vorwärts auf rückwärts oder umgekehrt auswählt, wird der Schaltvorgang selbsttätig dann stattfinden, sobald die Zahnräder, Zähne oder Nuten richtig ausgerichtet sind.

Die vom Einschalten und Ausschalten des Reversierers des Schrägförderers erforderliche Bewegung wird durch den Aktor bereitgestellt. Der Aktor ist vorzugsweise ein elektrisch angetriebenes Gerät. Ein Schalter in der Station oder Kabine des Bedieners erlaubt es dem Bediener, den Aktor aus der Ferne zu betätigen, um die gewünschte Bewegung abzuschließen. Aufgrund der in der Feder gespeicherten Energie kann der Bediener einmal eine Reversierschaltauswahl treffen und es dem System erlauben, in Eingriff zu geraten, wenn die Schalthülse mit entweder den dem Vorwärts- oder Rückwärtsbetrieb zugeordneten Zahnrädern, Zähnen oder Nuten ausgerichtet ist.

In einer Weiterentwicklung liefert ein Verbrennungsmotor einer steuerbaren Kupplung Drehantriebsleistung. Die Kupplung liefert an das Getriebe des Schrägförderers Antriebsleistung, wenn sie sich im Eingriff befindet. Eine Steuerung ist mit der steuerbaren Kupplung über geeignete Signalformmittel signalübertragend verbunden, um das Ein- und Ausschalten der Kupplung zu steuern. Der bedienergesteuerte Schalter ist mit der Steuerung signalübertragend verbunden.

Wenn der Schalter bewegt wird, um den Reversierer in Eingriff zu bringen, oder alternativ, ihn außer Eingriff zu bringen, bringt die Steuerung die Kupplung außer Eingriff. Ein Geschwindigkeitssensor überwacht die Geschwindigkeit der Zahnräder des Getriebes, wie beispielsweise über eine Ausgangswelle, die mit der angetriebenen Seite der Kupplung im Eingriff steht. Wenn die Welle angehalten hat, bewirkt die Steuerung die Betätigung des Aktors. Außerdem kann die Steuerung ein Signal an die Kupplung senden, um die Kupplung mit Pulsen zu beaufschlagen, um eine langsame Bewegung der Zahnräder innerhalb des Getriebes zu bewirken, bis die Zahnräder, Zähne oder Nuten zum Reversieren und alternativ die Zahnräder, Zähne oder Nuten zum Vorwärtsbewegen mit den Zahnrädern, Zähnen oder Nuten der Schalthülse ausgerichtet sind. Sobald sie ausgerichtet sind, tritt das Schalten auf. Das Getriebe kann derart ausgebildet sein, dass es an die Steuerung ein Steuersignal übersendet, welches das erfolgreiche Durchführen des Schaltvorgangs bestätigt. Alternativ kann die Steuerung die Kupplung veranlassen, nur für ein vorbestimmtes Zeitintervall gepulst zu werden, was einen zweiten Schaltversuch erfordert, wenn das Schalten nicht erfolgreich durchgeführt wurde. Die Steuerung bringt dann die Kupplung in Eingriff und die volle Drehleistung wird wieder an das Schrägförderergetriebe übertragen.

Nach der vorliegenden Erfindung kann ein Schalten in den Reversierbetrieb oder zurück in den Vorwärtsbetrieb durch das einfache Umlegen eines Schalters bewirkt werden. Der Bediener braucht nicht manuell die Zähne des Schrägförderergetriebes zu rütteln, um die Reversier- oder Vorwärtszahnradzusammenbauten in Eingriff zu bringen. Das Schalten wird automatisch bewirkt. Die automatische Steuerung des Reversierbetriebs wird weniger Schäden durch Bedienerfehler, die durch den Versuch zum Schalten bedingt sind, während die Getriebezahnräder noch nicht hinreichend verlangsamt sind, zur Folge haben. Der Schalter ist im Vergleich mit fuß- oder handbetätigten Zug und Druck übertragenden Kabeln für den Bediener leichter und bequemer zu betätigen. Außerdem entfällt durch den Wegfall des Kabels ein Punkt, durch den Schmutz und Lärm in die Kabine eindringen können.

In der Zeichnung ist ein nachfolgend näher beschriebenes Ausführungsbeispiel der Erfindung dargestellt. Es zeigt:
- Fig. 1: schematische Seitenansicht eines Mähdreschers, in dem die Erfindung verwirklicht ist,
- Fig. 2: eine vergrößerte, halbschematische Seitenansicht des Mähdreschers aus Figur 1,
- Fig. 3: einen Schnitt entlang der Linie 3-3 der Figur 2 durch das Planetengetriebe, in dem die Schalthülse im Eingriff mit dem Planetenausgangsrad bei Vorwärtsantrieb gezeigt wird,
- Fig. 4: eine Teilansicht ähnlich der Figur 3, in der die Schalthülse im Eingriff mit der Ringradkupplungsplatte bei Reversierbetrieb gezeigt wird,
- Fig. 5: eine vergrößerte, teilweise geschnittene Teilansicht des erfindungsgemäßen Schaltmechanismus,
- Fig. 6: ein Elektroschema des Steuersystems für den Schaltmechanismus der Figur 5, und
- Fig. 7: ein Schema einer Weiterentwicklung des Steuersystems für den Schaltmechanismus der Figur 5.

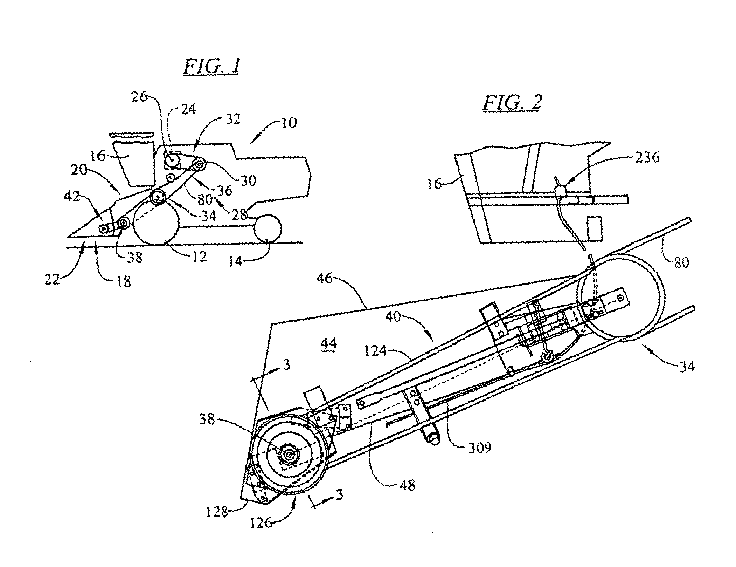

Die Figur 1 stellt einen selbstfahrenden Mähdrescher dar, der einen Hauptseparatorkörper 10 umfasst, welcher auf einem Paar vorderer Antriebsräder 12 und hinterer lenkbarer Räder 14 befestigt ist. Eine erhöhte Bedienerkabine 16 ist an der Vorderseite des Hauptseparatorkörpers 10 befestigt. Ein vorn angebrachter Erntevorsatz, der insgesamt mit 18 gekennzeichnet ist, ist um eine horizontale, quer verlaufende Schwenkachse (nicht gezeigt) an der Vorderseite des Hauptseparatorkörpers 10 schwenkbar angelenkt, um ihn durch konventionelle Mittel vertikal verstellen zu können. Der Hauptseparatorkörper 10 umfasst einen Schrägförderer oder Fördereinheit 20 und der Erntevorsatz 18 eine Aufnahmeeinheit 22. Ein quer angeordneter Verbrennungsmotor 24, der in Figur 1 nur in schematischen Umrissen gezeigt ist, ist nahe der Front des Hauptseparatorkörpers 10 befestigt und hat eine Ausgangswelle 26, die sich an der linken Seite des Hauptseparatorkörpers 10 erstreckt. Ein Antriebssystem des Riementyps, das in seiner Gesamtheit mit der Bezugsziffer 28 gekennzeichnet ist, ist an der linken Seite des Mähdreschers vorgesehen und überträgt Leistung von der Ausgangswelle 26 des Motors auf den Erntevorsatz 18.

Das Antriebssystem 28 umfasst eine primäre Gegenwelle 30, die an dem Hauptseparatorkörper 10 befestigt ist und durch einen Treibriemen 32 mit der Ausgangswelle 26 verbunden ist. Ein beweglicher Gegenwellenzusammenbau 34 ist an der linken Seite der Fördereinheit 20 angebracht und durch einen Vorsatzübertragungsantrieb, der insgesamt mit 36 gekennzeichnet ist, mit der primären Gegenwelle 30 verbunden. Eine Vorsatzantriebswelle 38 ist quer nahe des vorderen Endes der Fördereinheit 20 befestigt, wie am klarsten in der Figur 2 gezeigt wird. Die Vorsatzantriebswelle 38 ist mit der beweglichen Gegenwelle 30 über einen Vorsatzantrieb verbunden, der in den Figuren 1 und 2 insgesamt mit dem Bezugszeichen 40 gekennzeichnet ist. Endantriebe für die Fördereinheit 20 und die Aufnahmeeinheit 22 werden durch konventionelle Mittel, wie den Schneidwerksantrieb 42, der schematisch in der Figur 1 dargestellt ist, von der Vorsatzantriebswelle 38 abgenommen.

Die in Figur 2 in schematischen Umrissen gezeigte Fördereinheit 20 umfasst ein Paar gegenüberliegender, aufrechter Seitenwände 44, eine obere Wand 46 und eine untere Wand 48.

Ein V-Riemen 124 des Vorsatzantriebes 40 überträgt Leistung vom beweglichen Gegenwellenzusammenbau 34 über einen Getriebezusammenbau, der in seiner Gesamtheit mit der Nummer 126 gekennzeichnet ist, koaxial mit der Vorsatzantriebswelle 38 ist und mit ihr im Antriebseingriff steht, auf die Vorsatzantriebswelle 38.

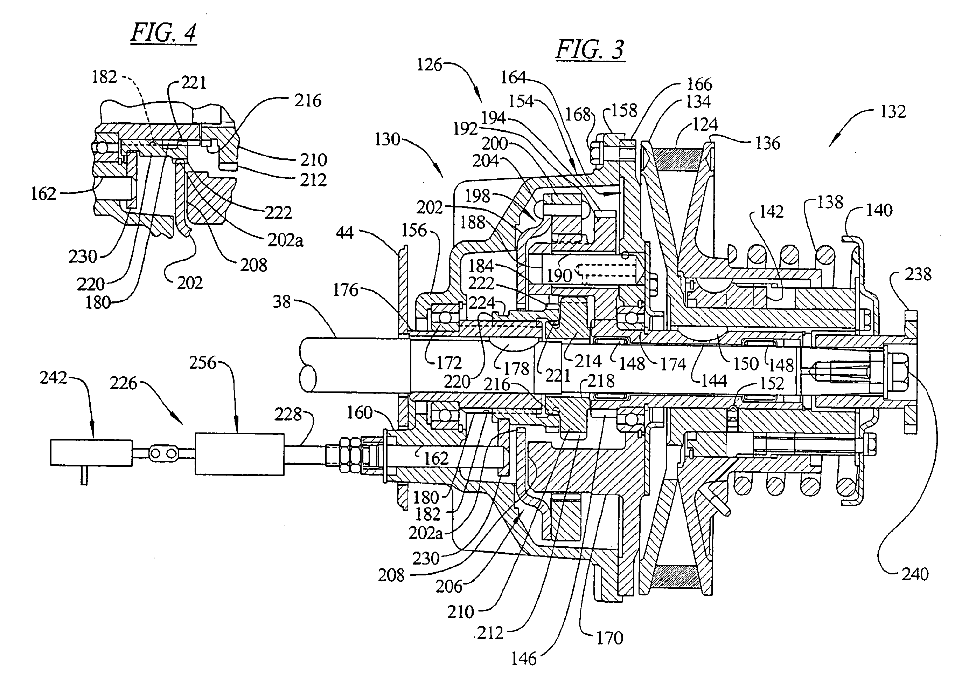

Der Getriebezusammenbau 126, der am Besten in der Figur 3 gezeigt ist, ist an der linken Seitenwand 44 der Fördereinheit in der Nähe ihres vorderen Endes durch einen Halterungszusammenbau 128 (nur in Figur 2 gezeigt) befestigt und derart angeordnet, dass die Vorsatzantriebswelle 38 quer in unmittelbarer Nähe der Bodenwand 48 der Fördereinheit liegt. Der Getriebezusammenbau 126 kombiniert in einer integrierten Einheit ein Planetengetriebe, das insgesamt mit 130 gekennzeichnet ist, und einen Riemenscheibenzusammenbau, der insgesamt durch die Nummer 132 gekennzeichnet ist.

Der von dem V-Riemen 124 angetriebene Riemenscheibenzusammenbau 132 ist eines drehmomentsensitiven oder drehmomentabhängigen Typs mit variablem Durchmesser und umfasst ein axial befestigtes Riemenscheibenelement 134 und ein axial verstellbares Riemenscheibenelement 136. Eine Kompressionsfeder 138, die zwischen einer Federhalterung 140 und dem beweglichen Riemenscheibenelement 136 gehaltert ist, spannt dieses Element axial in Richtung auf das feste Riemenscheibenelement 134 in der Richtung eines sich vergrößernden effektiven Durchmessers vor. Die Empfindlichkeit der Drehmomenterfassung oder Drehmomentabhängigkeit des Riemenscheibenzusammenbaus 132 hängt von der Kontrolle der relativen Drehung zwischen den beiden Riemenscheibenelementen 134 und 136 ab und wird durch einen Nockenzusammenbau 142 bewirkt, der in einem Ringspalt zwischen ihnen enthalten ist.

Der Nockenzusammenbau 142 ist derart zwischen den Riemenscheibenelementen 134 und 136 angeordnet, dass jedes Bestreben nach einer relativen Drehung zwischen den beiden Riemenscheibenelementen eine Nockenbewegung zum Ergebnis hat, die das axial verstellbare Riemenscheibenelement 136 in Richtung auf das Riemenscheibenelement 134 vorspannt. Der Riemenscheibenzusammenbau 132 ist durch einen nabenartigen Fortsatz 144 eines eingangsseitigen Sonnenrads 146, der durch ein Paar an Lagerungen 148 drehbar auf der Welle 38 gelagert ist, drehbar auf der Vorsatzantriebswelle 38 abgestützt. Der Riemenscheibenzusammenbau 132 ist antriebsmäßig mit der eingangsseitigen Getriebenabe 144 durch eine Feder 150 und Verstellschrauben 152 verkeilt und befestigt.

Das Planetengetriebe 130 umfasst ein im Wesentlichen zylindrisches, glockenförmiges Getriebegehäuse 154, das die aktuellen Anbringpunkte (nicht gezeigt) des Getriebezusammenbaus 126 am Halterungszusammenbau 128 einschließt. Das innere Ende des Getriebegehäuses 154 umfasst ein Lagergehäuse 156 und das äußere Ende hat einen ringförmigen Flansch 158.

Ein Anguss 160 mit einer parallel zur Vorsatzantriebswelle 38 verlaufenden Bohrung 162, die bis in das Innere des Getriebegehäuses 154 geht, verläuft von der rückwärtigen Seite des Getriebegehäuses 154 in der Nähe des Lagerungsgehäuses 156 axial. Ein Ritzelträger 164 schließt den Glockenmund des Getriebegehäuses 154 und umfasst einen Deckelabschnitt 166, der durch eine Vielzahl an Befestigungselementen 168 an dem Flansch 158 des Getriebegehäuses befestigt ist. Der Ritzelträger 164 umfasst eine Ritzelträgerstruktur 170, die sich axial von dem Deckelabschnitt 166 erstreckt.

Das Getriebegehäuse 154 und der Ritzelträger 164 bilden zusammen einen Getriebegehäusezusammenbau, durch den sich die Vorsatzantriebswelle 38 drehbar erstreckt, die durch Lagerungen 172 und 174 getragen wird, welche jeweils in dem Lagergehäuse 156 des Getriebegehäuses und in einer mittigen Bohrung des Ritzelträgers 164 gelagert sind. Ringförmig zwischen den Lagerungen und der Welle angeordnet sind jeweils eine Wellennabe 176 und die Eingangszahnradnabe 144. Ein Scheibenkeil 178 verbindet die Wellennabe 176 antriebsmäßig mit der Welle 38. Ein Abschnitt der Nabenwelle 176 mit vergrößertem Durchmesser erstreckt sich innerhalb des Getriebegehäuses 154 und umfasst äußere Nuten 180 und eine Einschnappringnut 182, die sich mit den Nuten 180 überlagert.

Die Ritzelträgerstruktur 170 umfasst eine Vielzahl an Bohrungen 184, die eine Vielzahl an Stiften 188 trägt, an denen Ritzel 192 durch eine Vielzahl an Lagerungen 190 drehbar gelagert sind. Jedes Ritzel 192 umfasst als integrale Teile ein erstes Planetenzahnrad 194 in unmittelbarer Nähe des Deckelabschnitts 166, das mit dem Eingangssonnenrad 146 im Antriebseingriff steht, und ein zweites Planetenzahnrad 196 in unmittelbarer Nähe des ersten Planetenzahnrads 194. Die zweiten Planetenzahnräder 196 stehen mit einem Ringradzusammenbau 198 im Antriebseingriff und tragen ihn, der ein Ringrad 200 und eine konzentrisch schalenförmige, als zweites Getriebeelement vorgesehene Kupplungsplatte 202 umfasst, die durch eine Vielzahl an Befestigungselementen 204 am Ringrad befestigt ist. Der Ringradzusammenbau kann sich frei im Getriebegehäuse 154 bewegen, wobei seine Bewegung radial nur durch den Eingriff des Ringrads 200 mit den zweiten Planetenrädern 196 und axial nur durch die Begrenzung der Kupplungsplatte 202 jeweils zwischen benachbarten Seiten 206 und 208 des Getriebegehäuses 154 und die Ritzelträgerstruktur 170 beschränkt wird. Ein als drittes Getriebeelement vorgesehenes Ausgangssonnenrad 210 ist konzentrisch mit der Vorsatzantriebswelle 38 zwischen der Wellennabe 176 und dem Eingangssonnenrad 146 angeordnet. Das Ausgangssonnenrad 210 umfasst einen Tellerradabschnitt 212, das mit den zweiten Planetenrädern im Antriebseingriff steht und in unmittelbarer Nähe der Wellennabe 176 einen nabenartigen Fortsatz, der äußere Nuten 216 trägt, die mit denen (180) der Wellennabe 176 zusammenpassen. Das Ausgangssonnenrad 210 hat eine innere Bohrung 218, die den Durchmesser der benachbarten Abschnitte der Vorsatzantriebswelle 38 überschreiten und radial nur durch ihren Eingriff mit den Zähnen der zweiten Planetenräder 196 und axial durch ihren engen Einschluss zwischen der Welle von 176 und dem Eingangssonnenrad 146 in Position gehalten wird.

Eine innen vernutete, als erstes Getriebeelement vorgesehene Schalthülse 220 ist gleitbar auf den passenden Nuten der Wellennabe 176 abgestützt und axial derart angeordnet, dass die inneren Nuten 221 (gezeigt in Figur 3) selektiv auch in die äußeren Nuten 216 des Ausgangssonnenrads 210 eingreifen (wie in Figur 3 gezeigt) oder nicht darin eingreifen, so dass die Wellennabe 176 auswählbar mit dem Ausgangssonnenrad 210 gekoppelt oder davon entkoppelt ist. Ein äußerer Abschnitt der Schalthülse 220 mit vergrößertem Durchmesser trägt einen äußeren genuteten Abschnitt mit äußeren Nuten 222, die mit inneren Nuten 202a der Kupplungsplatte 202 zusammenpassen. Das innere Ende der Schalthülse 220 hat eine äußere ringförmige Nut 224. Die Schalthülse 220 ist außerdem axial derart angeordnet, dass die inneren Nuten 202a der Kupplungsplatte 202 auswählbar mit den zusammenpassenden äußeren Nuten 222 der Schalthülse 220 in Antriebseingriff gelangen (wie in Figur 4 gezeigt) oder damit außer Eingriff geraten, so dass die Wellennabe 176 selektiv mit dem Ringradzusammenbau 198 gekoppelt oder davon entkoppelt ist.

Ein Schubzusammenbau 226 hat eine Schubwelle oder Schubgabel 228, die verschieblich in der Bohrung 162 des Angusses 160 des Getriebegehäuses 154 angeordnet ist. Die Schubgabel 228 erstreckt sich in das Getriebegehäuse 154 und trägt eine Schubplatte 230, die mit der äußeren Nut 224 der Schalthülse 220 im Eingriff steht.

Wie vorhin angemerkt, erstreckt sich die Vorsatzantriebswelle 38 nahe der Fördereinheit 20 quer. Ihr rechtes Ende (nicht gezeigt) erstreckt sich über die rechte Seitenwand 44 der Fördereinheit und ist nahe ihres Endes in einer von der Fördereinheit 20 abgestützten Lagerung drehbar gelagert. Endantriebe zu den Förder- und Aufnahmeeinheiten werden durch konventionelle Mittel von der Welle 38 abgenommen, einschließlich durch Ketten oder vernutete Kupplungen, wobei eine typische Kettenkupplungshälfte 238 in der Figur 3 gezeigt ist, durch eine Hutschraube 249 an der Vorsatzantriebswelle 38 gehalten. Eine Vorsatzantriebsanordnung, die genutete Kupplungen in der Vorsatzantriebswelle verwendet ist in der US Re 26 512 offenbart.

Der Eingang in das Planetengetriebe 130 geht durch das Eingangssonnenrad 146, das durch eine Nut-Feder-Verbindung mit dem angetriebenen Riemenscheibenzusammenbau 132 verbunden ist, wobei der Zusammenbau mit Zahnrad und Riemenscheibe als eine Einheit auf der Vorsatzantriebswelle 38 gelagert ist. Für einen normalen (Vorwärts-) Erntebetrieb bewegt der Bediener mittels eines in der Bedienerstation befestigten Richtungsschalters 236, der in Figur 2 gezeigt und unten beschieben wird, die Schalthülse 220 in die in Figur 3 gezeigte Position, so dass sie antriebsmäßig das Ausgangssonnenrad 210 mit der Vorsatzantriebswelle 38 verbindet, so dass die Welle 38 durch das Planetenritzel 192 und das Ausgangszahnrad 210 mit einer Geschwindigkeit angetrieben wird, die beträchtlich kleiner ist als die des Riemenscheibenzusammenbaus 132.

Um die Förder- und Aufnahmeeinheiten in umgekehrter Richtung anzutreiben, beispielsweise um einen Stau zu beseitigen, bewegt der Bediener die Schalthülse 220 in die in Figur 4 gezeigte Position, in der der Ringradzusammenbau 198 antriebmäßig mit der Vorsatzantriebswelle 38 verbunden ist. Der Antrieb wird nun vom Eingangssonnenrad 146 über das Planetenritzel 192 und das Ringrad 198 übertragen, so dass die Welle 38 in einer umgekehrten Richtung angetrieben wird.

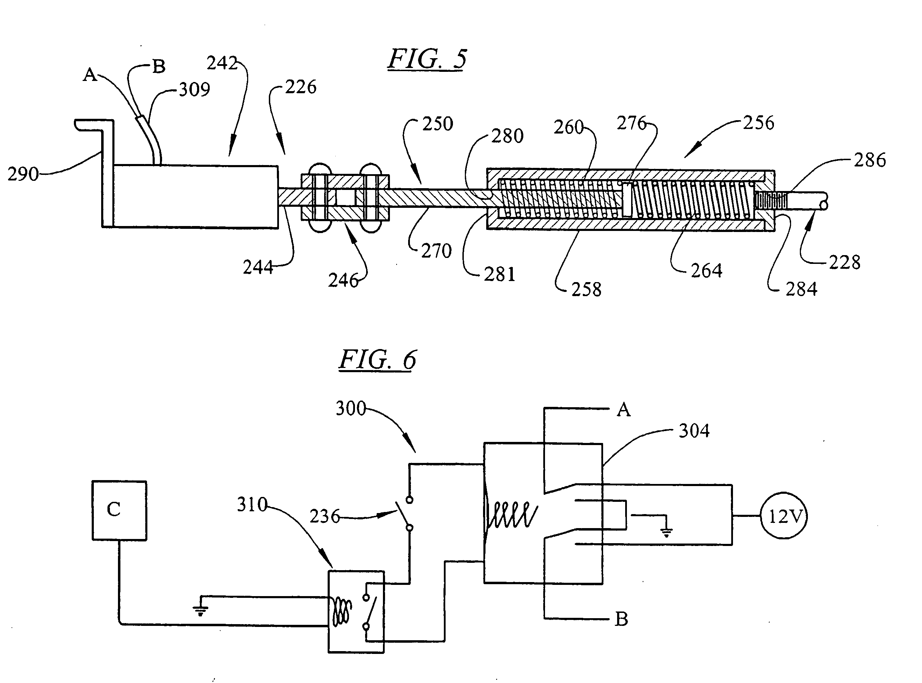

Die Figur 5 zeigt den erfindungsgemäßen Schubmechanismus 226. Der Schubmechanismus 226 umfasst einen elektrischen Aktor 242, wie einen linearen Aktor, der eine Aktorstange 244 hat, die durch eine Kettenverbindung 246 mit einem Kolben 250 verbunden ist. Der Aktor kann des Typs Warner ELECTRAC ONE sein mit einer Kraft von 334 N bei einem Hub von 50 mm und einer maximalen Stromaufnahme von 6 A bei 12 V Gleichspannung.

Ein Federsystem 256 ist mit der Aktorstange 244 verbunden. Das Federsystem 256 umfasst ein Gehäuse oder ein Rohr 258, das eine erste Kompressionsfeder 260 und eine zweite Kompressionsfeder 264 enthält. Der Kolben 250 umfasst eine Stange 270, die in das Rohr 258 eindringt, wobei die Stange 270 mit einem Kopf 276 verbunden ist, der im Rohr 258 enthalten ist. Das Rohr hat eine Öffnung 280 mit vermindertem Durchmesser an einem Grundende, um die erste Feder 260 zu haltern, und einen mit Gewinde versehenen Verschluss 284, der an ein gegenüberliegendes Ende des Zylinders angepasst ist, um die zweite Feder 264 zu haltern. Der mit Gewinde versehene Verschluss 284 umfasst ein mit Gewinde versehenes mittleres Loch 286, das es dem mit Gewinde versehenen Verschluss ermöglicht, auf ein mit Gewinde versehenes Ende der Schubwelle 228 des Getriebes 130 geschraubt zu werden. Das Federsystem ist in dem Rohr 258 enthalten um eine Beeinträchtigung der Federn zu vermeiden und die Kraftrichtung aufrecht zu erhalten.

Beim Betrieb bringt der Bediener den Reversierer des Schrägförderers in Eingriff, indem er den Zustand des in der Bedienerstation angeordneten Schalters 236 ändert. Wenn der Schalter 236 geschlossen ist und Strom durch zum Aktor fließt, wird der Aktor 242 die Aktorstange 244 in der Figur 5 um eine vorbestimmte Entfernung nach links ziehen, wie z. B. 50 mm, um den Kolben 250 zu ziehen. Der Kolben 250 wird eine Kompressionskraft auf die erste Feder 260 ausüben und sie zusammendrücken. Die erste Feder 260 übt wiederum Druck auf das Grundende 281 des Rohrs 258 aus. Diese Bewegung bedingt, dass der Federzusammenbau 256 und die Schubwelle 228 in Richtung auf den Aktor 242 gezogen werden und die Schubkraft erzeugen. Die Schubkraft wird durch die zusammengedrückte Feder 260 aufrechterhalten, bis die inneren Nuten 202a der Kupplungsplatte mit dem genuteten Abschnitt 222 der Schalthülse 220 in Ausrichtung gelangen. Wenn die Ausrichtung erfolgt, wird der Reversierer des Schrägförderers durch die Schaltkraft in Eingriff gebracht.

Um den Reversierer des Schrägförderers außer Eingriff zu bringen, tritt eine ähnliche Sequenz auf. Der Aktor 242 wird sich ausstrecken, den Kolben 250 in Figur 5 um eine Entfernung nach rechts bewegen, wie z. B. 5 cm, um die zweite Feder 264 zusammenzudrücken. Die zusammengedrückte Feder 264 bedingt eine Kraft, die auf die Schubwelle 228 auszuüben ist. Wenn die inneren Nuten 221 der Schalthülse 220 nicht genau mit den äußeren Nuten 216 des Ausgangssonnenrads 210 ausgerichtet sind, wird die Feder 264 zusammengedrückt bleiben, um Energie zu speichern. Wenn sich das Getriebe dreht, werden sich die Nuten 221, 216 bald ausrichten und durch die Kraft der Feder 264 über die Schubwelle 228 in Eingriff gebracht werden. Jede Feder wird nur während einer Bewegungsrichtung zusammengedrückt.

Eine Halterung 290 kann verwendet werden, den Schubmechanismus 226 an der unteren Wand des Schrägförderers zu befestigen und eine ungewünschte Bewegung während des Ausstreckens und Zusammenziehens zu beschränken. Jede vom Aktor 242 bereitgestellte Kraft wird auf den Kolben 250 ausgeübt.

Die Figur 6 zeigt das elektrische System für den Schubmechanismus 226. Der Schalter 236 kann ein im Instrumentenbrett der Bedienerstation angeordneter Ein/Ausschalter sein. Ein elektrisches Relais 304, z. B. ein Relais mit zwei Umschaltern, wird verwendet, um den Strom durch den Schalter 236 zu vermindern und die Länge und Anzahl der Drähte zu vermindern. Die Betätigung wird durch eine Umkehrung der Polarität der Versorgungsspannung beim Umschalten des Schalters 236 erreicht. Die Leiter A und B sind daher alternativ auf Betriebsspannung, wie 12 V, oder auf Masse, abhängig von der gewählten Schaltrichtung des Aktors 242. Die Leiter sind über ein Kabel 309 mit dem Aktor 242 verbunden.

Um eine hohe Zuverlässigkeit und eine lange Produktlebensdauer aufrechtzuerhalten, kann der Schalter 236 in ein Steuerungssystem integriert werden, so dass ein Schalten nicht auftreten kann, während der Mähdrescher unter voller Last ist oder während die Trenneinrichtung im Betrieb ist. Eine Mähdreschersteuerung C kann mit einem Relais oder einem Schalter 310 signalübertragend verbunden sein. Der Schalter 310 ist mit dem Schalter 236 in Serie geschaltet. Der Schalter 236 für den Reversierer kann somit elektrisch von der Drehzahlreglerposition oder dem Vorsatzabschaltschalter abhängig sein. Im Ergebnis kann das Schalten des Schrägförderers in einen Rückwärtsgang nicht auftreten, solange nicht schadensvorbeugende Schritte vorgenommen werden.

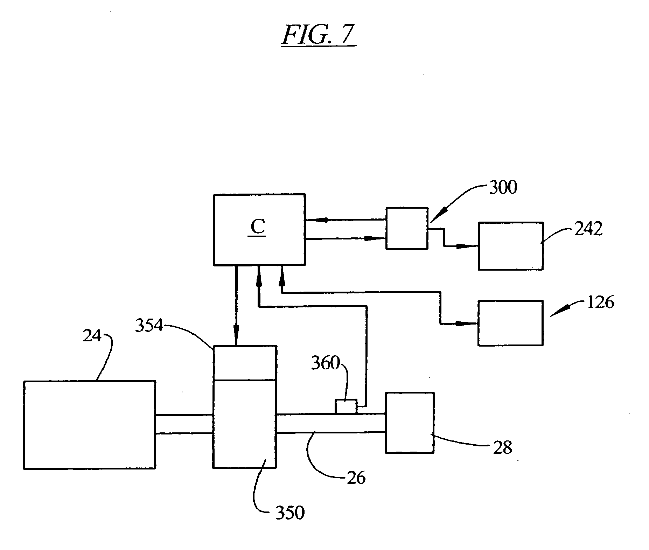

Die Figur 7 stellt eine weitere Entwicklung der Steuerung des erfindungsgemäßen Schubmechanismus für den Reversierer dar. Nach diesem Steuerungsschema gibt der Motor Drehleistung an eine hydraulisch betätigte Kupplung 350 ab, die durch eine Feder in Eingriff und hydraulisch außer Eingriff gebracht wird. Die Kupplung 350 gibt, wenn sie im Eingriff ist, Drehleistung an die Ausgangswelle 26 ab, die Drehleistung an das Riemensystem 28 abgibt. Ein hydraulisches Proportionalsteuerventil 354 gibt ein unter kontrolliertem Druck stehendes hydraulisches Fluid an die Kupplung 350 ab. Die Steuerung C ist mit dem Steuerventil 354 über geeignete Signalformungsmittel signalübertragend verbunden, um den Eingriff und das Abschalten der Kupplung 354 zu kontrollieren. Das elektrische System 300 mit dem Schalter ist mit der Steuerung C signalübertragend verbunden.

Wenn der Schalter 236 geschaltet wird, um den Reversierer in Eingriff zu bringen, bringt die Steuerung über das Steuerventil 354 die Kupplung außer Eingriff. Ein Geschwindigkeitssensor 360, wie ein Halleffektsensor, überwacht die Geschwindigkeit der Ausgangswelle. Wenn die Welle 26 und somit die Kupplungsplatte 202 sich zum Eingriff der inneren Nuten 202a der Kupplungsplatte 202 mit dem genuteten Abschnitt 222 der Schalthülse 220 hinreichend verlangsamt oder abgestoppt hat, betätigt das elektrische System 300 den Aktor 242. Zusätzlich kann die Steuerung C dann ein Signal an das Kupplungssteuerungsventil 354 senden, um die Kupplung 350 mit Impulsen zu beaufschlagen, so dass sie eine langsame Bewegung der Zahnräder innerhalb des Getriebes bewirkt, bis sich die inneren Nuten 202a der Kupplungsplatte 202 mit dem genuteten Abschnitt 222 der Schalthülse 220 ausrichten. Sobald sie ausgerichtet sind, erfolgt das Verschieben. Das Getriebe 126 kann derart konfiguriert sein, dass es eine Rückkopplung an die Steuerung C sendet, wobei das Signal das erfolgreiche Auftreten des Verschiebens bestätigt. Ein derartiges Rückkopplungssignal kann beispielsweise auf der Bewegung der Schubwelle 228 basieren. Die Steuerung C bringt dann die Kupplung 350 über das Steuerventil 354 in Eingriff und die volle Drehleistung wird wieder auf das Getriebe des Schrägförderers übertragen. Alternativ kann die Steuerung C bewirken, dass die Kupplung 350 nur für eine vorbestimmte Zeit mit Impulsen beaufschlagt wird, was einen zweiten Versuch zum Schalten erfordern kann, wenn die Verschiebung nicht erfolgreich durchgeführt wurde.

Um den Reversierer des Schrägförderers außer Eingriff zu bringen erfolgt eine ähnliche Sequenz. Wenn der Schalter 236 bewegt wird, um den Reversierer auszuschalten, um in einen normalen Vorwärtsbetrieb zurückzugehen, bringt die Steuerung C durch Ansteuerung des Steuerventils 354 die Kupplung 350 außer Eingriff. Ein Geschwindigkeitssensor 360, wie ein Halleffektsensor, überwacht die Geschwindigkeit der Ausgangswelle. Wenn die Welle 26 und somit das Ausgangssonnenrad 210 sich für einen Eingriff des Ausgangssonnenrads 210 mit der Schalthülse 220 hinreichend verlangsamt oder angehalten hat, versorgt das elektrische System 300 den Aktor 242 mit Energie.

Zusätzlich kann die Steuerung C dann ein Signal an das Kupplungssteuerventil 354 senden, um die Kupplung 350 mit Impulsen zu beaufschlagen, um eine langsame Bewegung der Zahnräder innerhalb des Getriebes zu bewirken, bis die inneren Nuten 221 der Schalthülse 220 genau mit den äußeren Nuten 216 des Ausgangssonnenrads 210 ausgerichtet sind. Wenn sich das Getriebe dreht, werden sich die Nuten 221, 216 gelegentlich ausrichten und durch die Kraft von der Feder 264 über die Schubwelle 228 in Eingriff gebracht werden, d. h. das Schalten erfolgt. Das Getriebe 126 kann dann ein Rückkopplungssignal an die Steuerung C senden, welches das erfolgreiche Auftreten des Schaltens bestätigt. Die Steuerung C kann alternativ die Kupplung veranlassen, nur für ein vorbestimmtes Zeitintervall mit Impulsen beaufschlagt zu werden, was einen zweiten Versuch erfordern kann, wenn der Schaltvorgang nicht erfolgreich auftrat. Die Steuerung C bringt dann die Kupplung 350 über das Steuerventil 354 in Eingriff und die volle Drehleistung wird wieder an das Getriebe des Schrägförderers übertragen.

## Patentansprüche

1. Mechanismus zum wahlweisen Verbringen eines ersten Getriebeelements (220) in Eingriff mit einem zweiten Getriebeelement (202) eines Getriebes (126), mit einem Aktor (242), der durch einen Bediener steuerbar ist, **gekennzeichnet durch** eine Feder (260), die **durch** eine Relativbewegung zwischen dem Aktor (242) und dem ersten Getriebeelement (220) bewegbar ist, um bei einer Bewegung des Aktors (242) Energie zu speichern.

2. Mechanismus nach Anspruch 1, **gekennzeichnet durch** eine zweite Feder (264), die bei einer Bewegung des Aktors (242) in die entgegengesetzte Richtung Energie speichert.

3. Mechanismus nach Anspruch 2, **dadurch gekennzeichnet, dass** ein Gehäuse (258) zwischen dem Aktor (242) und dem ersten Getriebeelement (220) angeordnet ist, dass der Aktor (242) mit einem im Gehäuse (258) angeordneten Kolben (250) verbunden ist und die erste Feder (260) zwischen dem Kolben (250) und dem vom Aktor (242) beabstandeten Ende des Gehäuses (258) angeordnet ist, während die zweite Feder (264) zwischen dem Kolben (250) und dem dem Aktor (242) benachbarten Ende des Gehäuses (258) angeordnet ist, und dass das Gehäuse (258) mit dem ersten Getriebeelement (220) verbunden ist.

4. Mechanismus nach einem der Ansprüche 1 bis 3, **dadurch gekennzeichnet, dass** das erste Getriebeelement (220) durch den Aktor (242) zwischen einer Position beweglich ist, in dem es sich im Eingriff mit dem zweiten Getriebeelement (202) befindet und einer Position, in der es sich mit einem dritten Getriebeelement (210) in Eingriff befindet.

5. Mechanismus nach einem der vorhergehenden Ansprüche, **dadurch gekennzeichnet, dass** die Feder oder Federn (260, 264) das erste Getriebeelement (220) selbsttätig mit dem anderen Getriebeelement (202, 210) in Eingriff bringen, wenn sich die in Eingriff zu bringenden Getriebeelemente ausgerichtet haben.

6. Schrägförderer (20) für einen Mähdrescher (10), mit einem Getriebe (126) zum Antrieb einer Welle (38), dessen Ausgangsdrehrichtung durch einen Mechanismus nach einem der vorhergehenden Ansprüche umkehrbar ist.

7. Mähdrescher (10) mit einem Schrägförderer (20) nach Anspruch 6, mit einer Steuerung (C), die mit dem Aktor (242) und einem Schalter (236) zur Erzeugung eines Reversiersignals verbunden ist, einer durch die Steuerung (C) betätigbaren Kupplung (350), die zwischen einen Motor (24) und dem Getriebe (126) angeordnet ist, und einem Geschwindigkeitssensor (360), der die Ausgangsgeschwindigkeit des Getriebes (126) erfasst, wobei die Steuerung (C) betreibbar ist, ein Reversiersignal vom Schalter (236) zu empfangen, dann die Kupplung (350) außer Eingriff zu bringen, auf ein Geschwindigkeitssignal vom Geschwindigkeitssensor (360) zu warten, das darauf hinweist, das die Geschwindigkeit des Getriebes (126) hinreichend gering ist, um das Getriebeelement (220) zu bewegen, dann den Aktor (242) zu betätigen, um das Getriebe (126) in eine Reversierschaltstellung zu bringen, dann ein Pulsiersignal an die Kupplung (350) zu senden, um das Getriebe (126) langsam in Drehung zu verbringen, und sobald das erste Getriebeelement (220) und das dritte Getriebeelement (210) im Eingriff sind, die Kupplung (350) zur Übertragung der normalen Drehleistung in Eingriff zu bringen.

8. Mähdrescher nach Anspruch 7, **dadurch gekennzeichnet, dass** der Schalter (236) vom Bediener betätigbar ist.

9. Mähdrescher nach Anspruch 7 oder 8, **dadurch gekennzeichnet, dass** die Steuerung (C) betreibbar ist, ein Signal zum Übergang in den normalen Erntebetrieb vom Schalter (236) zu empfangen, dann die Kupplung (350) außer Eingriff zu bringen, auf ein Geschwindigkeitssignal vom Geschwindigkeitssensor (360) zu warten, das darauf hinweist, das die Geschwindigkeit des Getriebes (126) hinreichend gering ist, um das Getriebeelement (220) zu bewegen, dann den Aktor (242) zu betätigen, um das Getriebe (126) in eine Vorwärtsbetriebsstellung zu bringen, dann ein Pulsiersignal an die Kupplung (350) zu senden, um das Getriebe (126) langsam in Drehung zu verbringen, und sobald das erste Getriebeelement (220) und das zweite Getriebeelement (202) im Eingriff sind, die Kupplung (350) zur Übertragung der normalen Drehleistung in Eingriff zu bringen.

## Claims

1. A mechanism for selectively moving a first gear element (220) into engagement with a second gear element (202) of a transmission (126), comprising an actuator (242) that can be controlled by an operator, **characterized by** a spring which is movable by a relative motion between the actuator (242) and the first gear element (220) in order to store energy upon movement of the actuator (242).

2. A mechanism according to claim 1, **characterized by** a second spring (264) storing energy at a movement of the actuator (242) in the opposite direction.

3. A mechanism according to claim 2, **characterized in that** a housing (258) is arranged between the actuator (242) and the first gear element (220), that the actuator (242) is connected to a plunger (250) arranged within the housing (258), that the first spring (260) is located between the plunger (250) and the end of the housing (258) spaced apart from the actuator (242), whereby the second spring (264) is arranged between the plunger (250) and the end of the housing (258) adjacent the actuator (242), and that the housing (258) is connected to the first gear element (220).

4. A mechanism according to one of claims 1 to 3, **characterized in that** the first gear element (220) can be moved by the actuator (242) between a position in which it meshes with the second gear element (202) and a position in which it meshes with the third gear element (210).

5. A mechanism according to one of the preceding claims, **characterized in that** the spring or springs (260, 264) move the first gear element (220) automatically into engagement with the other gear element (202, 210) when the gear elements to be engaged have aligned.

6. A feederhouse (20) for a combine, comprising a transmission (126) for driving a shaft (38), the output direction of the transmission (126) being reversible by a mechanism according to one of claims 1 to 5.

7. A combine (10) having a feederhouse (20) according to claim 6, comprising a controller (C) connected to the actuator (242) and a switch (236) for producing a reverse signal, a clutch (350) controllable by the controller (C) and arranged between an engine (24) and the transmission (126), and a speed sensor (360) sensing the output speed of the transmission (126), wherein the controller (C) is operable to receive a reverse signal from the switch (236), then to disengage the clutch (350), to await a speed signal from the speed sensor (360) indicating that the speed of the transmission is sufficiently low to move the gear element (220), then to actuate the actuator (242), in order to bring the transmission (126) into a reverse switch state, then to send a pulse signal to the clutch (350) to rotate the transmission (126) slowly, and once the first gear element (220) and the third gear element (210) are engaged, to engage the clutch (350) for transmitting the normal rotational power.

8. A combine according to claim 7, **characterized in that** the switch (326) can be actuated by the operator.

9. A combine according to claim 7 or 8, **characterized in that** the controller (C) is operable to receive a forward shift signal from the switch (236), then to disengage the clutch (350), to await a speed signal from the speed sensor (360) indicating that the speed of the transmission is sufficiently low to move the gear element (220), then to actuate the actuator (242), in order to bring the transmission (126) into a forward switch state, then to send a pulse signal to the clutch (350) to rotate the transmission (126) slowly, and once the first gear element (220) and the second gear element (202) are engaged, to engage the clutch (350) for transmitting the normal rotational power.

## Revendications

1. Mécanisme pour amener au choix un premier élément d'engrenage (220) en engrènement avec un deuxième élément d'engrenage (202) d'un engrenage (126), comportant un actionneur (242) qui peut être commandé par un utilisateur, **caractérisé par** un ressort (260), qui peut être déplacé par un mouvement relatif entre l'actionneur (242) et le premier élément d'engrenage (220) afin de stocker de l'énergie lors d'un mouvement de l'actionneur (242).

2. Mécanisme selon la revendication 1, **caractérisé par** un deuxième ressort (264), qui stocke l'énergie lors d'un mouvement de l'actionneur (242) dans la direction opposée.

3. Mécanisme selon la revendication 2, **caractérisé en ce qu'**un carter (258) est monté entre l'actionneur (242) et le premier élément d'engrenage (220), **en ce que** l'actionneur (242) est relié à un piston (250) monté dans le carter (258), et le premier ressort (260) est agencé entre le piston (250) et l'extrémité du carter (258), éloignée de l'actionneur (242), tandis que le deuxième ressort (264) est disposé entre le piston (250) et l'extrémité du carter (258), adjacente à l'actionneur (242), et **en ce que** le carter (258) est relié au premier élément d'engrenage (220).

4. Mécanisme selon l'une quelconque des revendications 1 à 3, **caractérisé en ce que** le premier élément d'engrenage (220) peut être déplacé par l'intermédiaire de l'actionneur (242) entre une position, dans laquelle il engrène avec le deuxième élément d'engrenage (202), et une position, dans laquelle il engrène avec un troisième élément d'engrenage (210).

5. Mécanisme selon l'une quelconque des revendications précédentes, **caractérisé en ce que** le ressort ou les ressorts (260, 264) amènent le premier élément d'engrenage (220) automatiquement en engrènement avec l'autre élément d'engrenage (202, 210) lorsque les éléments d'engrenage à amener en engrènement se sont alignés.

6. Convoyeur incliné (20) pour une moissonneuse-batteuse (10), comportant un engrenage (126) pour l'entraînement d'un arbre (38), dont le sens de rotation initial peut être inversé par un mécanisme selon une des revendications précédentes.

7. Moissonneuse-batteuse (10) comportant un convoyeur incliné (20) selon la revendication 6, une commande (C), qui est reliée à l'actionneur (242) et à un commutateur (236) destiné à délivrer un signal d'inversion, un embrayage (350) qui est apte à être actionné par la commande (C) et qui est monté entre un moteur (24) et l'engrenage (126), et un capteur de vitesse (360), qui détecte la vitesse initiale de l'engrenage (126), la commande (C) pouvant être actionnée pour recevoir un signal d'inversion du commutateur (236), amener alors l'embrayage (350) hors de prise, attendre un signal de vitesse délivré par le capteur de vitesse (360), lequel signale que la vitesse de l'engrenage (126) est suffisamment faible pour déplacer l'élément d'engrenage (220), actionner ensuite l'actionneur (242) pour amener l'engrenage (126) dans une position de commutation inverse, d'émettre ensuite un signal d'impulsion vers l'embrayage (350) pour amener lentement l'engrenage (126) en rotation, et, dès que le premier élément d'engrenage (220) et le troisième élément d'engrenage (210) sont en engrènement, amener l'embrayage (350) en prise pour la transmission de la puissance de rotation normale.

8. Moissonneuse-batteuse selon la revendication 1, **caractérisée en ce que** le commutateur (236) peut être actionné par l'utilisateur.

9. Moissonneuse-batteuse selon la revendication 7 ou 8, **caractérisée en ce que** la commande (C) peut être actionnée pour recevoir du commutateur (236) un signal pour passer en mode de coupe normal, amener ensuite l'embrayage (350) hors de prise, attendre un signal de vitesse délivré par le capteur de vitesse (360), lequel signale que la vitesse de l'engrenage (126) est suffisamment faible pour déplacer l'élément d'engrenage (220), actionner ensuite l'actionneur (242) pour amener l'engrenage (126) dans une position de marche avant, émettre ensuite un signal d'impulsion vers l'embrayage (350) pour amener lentement l'engrenage (126) en rotation, et, dès que le premier élément d'engrenage (220) et le deuxième élément d'engrenage (202) sont en engrènement, amener l'embrayage (350) en prise pour la transmission de la puissance de rotation normale.
